# EUROPÄISCHE PATENTSCHRIFT

(11) **EP 2 669 623 B1**
(45) Veröffentlichungstag und Bekanntmachung des Hinweises auf die Patenterteilung: **15.10.2014**
(21) Anmeldenummer: 13152571.9
(22) Anmeldetag: 24.01.2013
(51) Int. Cl.: G01B 17/00, B66C 13/46, B66C 15/06, B66C 23/78, G01S 11/14, G01S 15/08

(54) **Vorrichtung zum Bestimmen einer Ausfahrlänge eines ausfahrbaren Maschinenteils**
DEVICE FOR DETERMINING THE LENGTH OF EXTENSION OF AN EXTENDABLE MACHINE PART
DISPOSITIF DE DÉTERMINATION DE LA LONGUEUR DÉPLOYÉE D'UNE PIÈCE DE MACHINE DÉPLOYABLE

(30) Priorität: 02.06.2012 DE 202012005462 U
(43) Veröffentlichungstag der Anmeldung: 04.12.2013
(73) Patentinhaber: MOBA - Mobile Automation AG, 65555 Limburg (DE)
(72) Erfinder: Zils, Boris, 65555 Limburg (DE)
(74) Vertreter: Zimmermann, Tankred Klaus

(56) Entgegenhaltungen:
- DE-A1-102008 048 307
- DE-A1-102009 003 734
- JP-A- 60 017 378

## Beschreibung

Die vorliegende Erfindung bezieht sich auf eine Vorrichtung zur Bestimmung einer Ausfahrlänge eines ausfahrbaren Maschinenteils. Ausführungsbeispiele beziehen sich insbesondere auf ein Ultraschallsystem zur Längenmessung, vorzugsweise auf ein redundantes Ultraschallsystem zur Längenmessung des ausfahrbaren Maschinenteils.

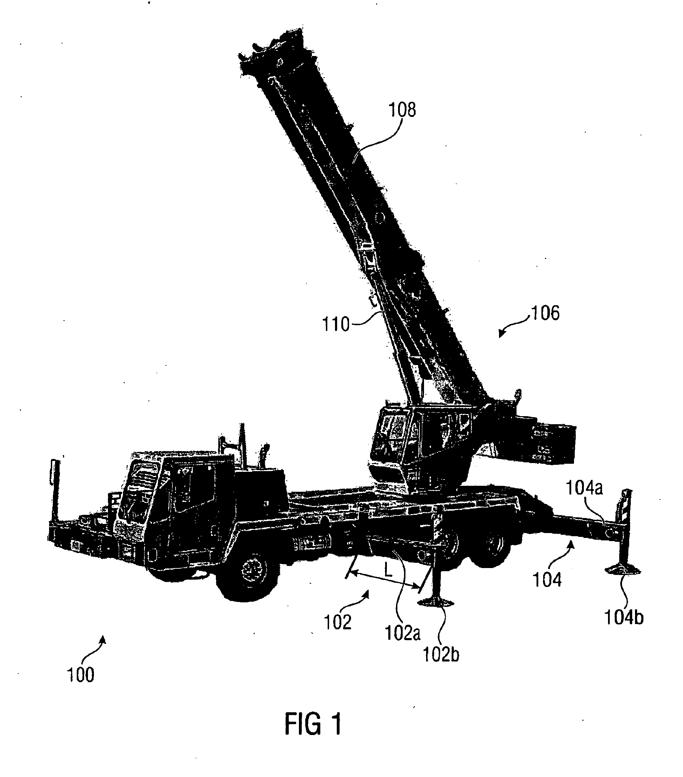

An mobilen Maschinen, wie beispielsweise Hubarbeitsbühnen, Autokrane, Betonpumpen, sind ausfahrbare Teile vorgesehen, beispielsweise Teleskopzylinder oder ausfahrbare Stützen. Die Fig. 1 zeigt ein Beispiel für eine solche, bekannte mobile Maschine in Form eines mobilen Krans 100. Der mobile Kran 100 umfasst bei dem gezeigten Beispiel vier Stützen, von denen in Fig. 1 lediglich zwei zu sehen sind, die in der Figur mit den Bezugszeichen 102 und 104 bezeichnet sind. Jede der Stützen 102, 104 umfasst einen horizontalen Stempel 102a, 104a, an denen jeweils ein vertikaler Stempel 102b, 104b angeordnet ist. Die horizontalen Stempel 102a und 104a sind in horizontaler Richtung beweglich und können, wie in Fig. 1 gezeigt ist, ausgefahren werden, wobei in Fig. 1 eine Ausfahrlänge L angezeigt ist. Die vertikalen Stempel 102b und 104b sind vertikal beweglich angeordnet. Der mobile Kran 100 umfasst ferner einen drehbar gelagerten Kranaufsatz 106, der einen Kranarm 108 aufweist. Der Kranarm 108 kann mehrere, in Fig. 1 nicht gezeigte Segmente umfassen, die bezogen auf die in Fig. 1 gezeigte Darstellung ausgefahren werden können, um eine Höhe und Reichweite des Krans entsprechend den Erfordernissen einzustellen. Die Betätigung des Kranarms 108 oder der Segmente des Kranarms 108 kann beispielsweise durch entsprechende hydraulische Teleskopzylinder erfolgen.

Bei mobilen Maschinen werden zur Abstützung die horizontalen Arme 102a, 104a ausgefahren, und die an deren äußeren Enden angeordneten vertikalen Stempel 102b, 104b werden nach unten gefahren, um eine Abstützung des Fahrzeugs bzw. der mobilen Maschine auf dem Boden zu ermöglichen, so dass das Fahrzeug eine stabile Lage annimmt, und beispielsweise nicht mehr auf den Rädern steht. Während des Betriebs kann, abhängig von den Gegebenheiten, der Kranarm 108 auf entsprechende Höhen ausgefahren werden, wie es oben erwähnt wurde, und eine Neigung des Kranarms 108 wird beispielsweise durch Ein/Ausfahren eines Zylinders 110 eingestellt.

Sowohl die Betätigung der Stützen 102, 104 als auch die Betätigung der Zylinder im Kranarm 108 bzw. des Zylinders 110 sind zu überwachen, um einen sicheren Betrieb des Krans zu gewährleisten.

Je weiter die horizontalen Stempel 102a, 104a ausgefahren werden, um so größer kann das seitliche Auslegen des Arbeitswerkzeugs, beispielsweise des Kranarms 108, oder der Hebebühne sein, ohne dass eine Gefahr des Umkippens oder von Instabilitäten besteht. Eine einfache Steuerung bestünde darin, die Stützen immer maximal auszufahren, um eine höchstmögliche Auslenkung des Arbeitswerkzeugs zu ermöglichen. Allerdings ist dieses maximale Ausfahren der Stützen nicht immer möglich oder auch nicht immer erwünscht, beispielsweise aufgrund von beengten Platzverhältnissen oder aufgrund der Tatsache, dass eine höchste Auslenkung des Arbeitswerkzeugs gar nicht erforderlich ist. Aus diesem Grund ist es wünschenswert, möglichst exakt zu messen, wie weit die vier Ausfahrstempel 102a, 104a und/oder die Zylinder zum Betätigen des Arbeitswerkzeuges ausgefahren sind, um dann in Verbindung mit einer Lastmessung eine optimale Standsicherheit bei gleichzeitiger optimaler Ausnutzung der seitlichen Auslegung zu gewährleisten. Zur Erreichung einer ausreichend hohen Arbeitssicherheit ist es erforderlich, dass diese Längenmessung möglichst exakt geschieht.

Im Stand der Technik werden vorwiegend Seilzugsensoren zum Messen der Ausfahrlänge eingesetzt. Diese Seilzugsensoren weisen üblicherweise ein Stahlseil auf, welches mit einer federvorgespannten Aufwickelvorrichtung und einem daran angebrachten Ein- oder Mehrwegpotentiometer gekoppelt ist. Neuere Seillängengeber verwenden anstelle der Potentiometer berührungslose Sensorelemente, beispielsweise Hallsensoren. Ein Nachteil dieser bekannten Seillängengeber besteht darin, dass diese eine Vielzahl beweglicher Teile aufweisen, die ihrerseits relativ störanfällig sind. Außerdem sind diese nur begrenzt in einem rauen Mobilbetrieb einsetzbar. Ferner zeigen die mechanischen Teile einen erhöhten Verschleiß, so dass zur Gewährleistung einer ausreichenden Sicherheit meist je zwei dieser Sensoren eingebaut werden.

Ein weiterer, im Stand der Technik bekannter Ansatz zur Erfassung der Längen der ausfahrbaren Maschinenteile besteht darin, optische Abstandssensoren vorzusehen. Der Nachteil dieser optischen Abstandssensoren besteht jedoch darin, dass hier Licht zum Messen des Abstandes eingesetzt wird, so dass diese anfällig gegen Verschmutzung sind.

Wiederum weitere Ansätze beschreiben die Verwendung von Ultraschallsensoren, die oftmals auch in Baumaschinen eingesetzt werden. Hierbei ist ein Ultraschallwandler vorgesehen, der Schallwellen mit einem bestimmten Öffnungswinkel aussendet, wobei mit dem Aussenden ein Zeitgeber gestartet wird. Die ausgesendeten Ultraschallwellen werden dann von einem Objekt, auf welches diese auftreffen, reflektiert und zu dem Wandler zurückgegeben, der dann als Empfänger arbeitet. Dort wird das empfangene Signal verstärkt und der Zeitgeber angehalten, so dass basierend auf der abgelaufenen Zeit zwischen dem Senden und Empfangen des Ultraschallsignals auf den Abstand des Objekts zu dem Wandler geschlossen werden kann. Nachteilig an dieser Ausgestaltung ist, dass die Schallausbreitung nicht eng fokussiert werden kann, so dass ein Messen in engen Räumen, wie es insbesondere bei Anwendungen in mobilen Geräten der Fall ist, nur sehr aufwendig möglich ist.

Ein weiterer Ansatz zur Bestimmung einer Ausfahrlänge wird in der DE 10 2008 048 307 A1 beschrieben, gemäß der zwei Ultraschallsensoren vorgesehen sind, wobei eine erste Laufzeit zwischen dem Senden und Empfangen eines ersten Ultraschallsignals, welches von dem ersten Wandler gesendet wird, und eine zweite Laufzeit zwischen dem Senden und Empfangen eines zweiten Ultraschallsignals, welches von dem zweiten Wandler ausgesendet wird, verwendet wird, um einen Abstand zu bestimmen. Nachteilig ist, dass dieses System lediglich einen stationären Sensor und einen beweglichen Sensor umfasst.

Weitere Ansätze zur Bestimmung einer Ausfahrlänge von beweglichen Teilen durch Ultraschallsensoren sind in der DE 10 2009 003 734 A1 oder in der JP 60-017378 A beschrieben.

Ausgehend von diesem Stand der Technik liegt der vorliegenden Erfindung die Aufgabe zugrunde, einen verbesserten Ansatz zum Bestimmen einer Ausfahrlänge eines ausfahrbaren Maschinenteils zu schaffen, der sowohl robust ist als auch die Messaufgabe im Hinblick auf die Sicherheit zufriedenstellend löst, so dass ein System umfassend eine solche Vorrichtung eine erhöhte Betriebssicherheit aufweist und genauer arbeitet.

Diese Aufgabe wird durch eine Vorrichtung gemäß Anspruch 1 gelöst.

Ausführungsbeispiele der Erfindung schaffen eine Vorrichtung, bei der der erste Ultraschallsensor einen Träger umfasst, auf dem der erste Ultraschallwandler und der zweite Ultraschallwandler angeordnet sind. Der Träger kann zwei in Messrichtung gerichtete Flächen aufweisen, an denen der erste Ultraschallwandler und der zweite Ultraschallwandler angeordnet sind. Der Träger kann im Querschnitt L-förmig sein.

Ausführungsbeispiele der Erfindung schaffen eine Vorrichtung, bei der die Steuerung ausgebildet ist, um basierend auf den durch den ersten Ultraschallwandler und den zweiten Ultraschallwandler empfangenen Ultraschallsignalen die Ausfahrlänge zu bestimmen.

Ausführungsbeispiele der Erfindung schaffen eine Vorrichtung, bei der der erste Ultraschallwandler und der zweite Ultraschallwandler um einen vorbestimmten Abstand versetzt angeordnet sind, und bei der die Steuerung ausgebildet ist, um basierend auf dem Abstand zwischen dem ersten Ultraschallwandler und dem zweiten Ultraschallwandler und basierend auf einer Differenz der Laufzeiten der durch den ersten Ultraschallwandler und den zweiten Ultraschallwandler empfangenen Ultraschallsignale eine Umgebungstemperatur abzuleiten.

Ausführungsbeispiele der Erfindung schaffen eine Vorrichtung, bei der die Steuerung ausgebildet ist, um den ersten Ultraschallsensor zum wahlweisen Senden und Empfangen von Ultraschallsignalen anzusteuern.

Ausführungsbeispiele der Erfindung schaffen eine Vorrichtung, bei der die Steuerung ausgebildet ist, um den ersten Ultraschallsensor anfänglich anzusteuern, um ein Ultraschallsignal auszusenden, und um den ersten Ultraschallsensor nach dem Aussenden des Ultraschallsignals anzusteuern, um durch den ersten Ultraschallwandler und durch den zweiten Ultraschallwandler ein reflektiertes Ultraschallsignal zu empfangen.

Ausführungsbeispiele der Erfindung schaffen eine Vorrichtung, bei der der erste Ultraschallsensor stationär angeordnet ist, oder angeordnet ist, um sich ansprechend auf eine Bewegung des ausfahrbaren Maschinenteils zu bewegen.

Ausführungsbeispiele der Erfindung schaffen eine Vorrichtung, mit einem zweiten Ultraschallsensor, wobei die Steuerung ausgebildet ist, um den zweiten Ultraschallsensor anzusteuern, um ein Ultraschallsignal in Richtung des ersten Ultraschallsensors auszusenden, und um den ersten Ultraschallsensor anzusteuern, um das von dem zweiten Ultraschallsensor ausgesendete Ultraschallsignal durch den ersten Ultraschallwandler und den zweiten Ultraschallwandler des ersten Ultraschallsensors zu empfangen.

Gemäß Ausführungsbeispielen ist einer der Ultraschallsensoren stationär angeordnet, und der andere der Ultraschallsensoren kann angeordnet sein, um sich ansprechend auf eine Bewegung des ausfahrbaren Maschinenteils zu bewegen.

Gemäß Ausführungsbeispielen sind die Ultraschallsensoren so angeordnet, dass sich deren Abstand vergrößert oder verkleinert, je weiter das ausfahrbare Maschinenteil ausgefahren ist.

Gemäß Ausführungsbeispielen umfasst der zweite Ultraschallsensor einen ersten Ultraschallwandler und einen zweiten Ultraschallwandler, die entlang der Messrichtung versetzt angeordnet sind, und die Steuerung ist ausgebildet, um einen der Ultraschallwandler des zweiten Ultraschallsensors zum Aussenden des Ultraschallsignals anzusteuern.

Gemäß Ausführungsbeispielen ist der Versatz der Ultraschallwandler des ersten Ultraschallsensors und der Versatz der Ultraschallwandler des zweiten Ultraschallsensors gleich, und der erste Ultraschallsensor und der zweite Ultraschallsensor sind so sind, dass der Abstand zwischen dem ersten Ultraschallwandler des ersten Ultraschallsensors und dem zweiten Ultraschallwandler des zweiten Ultraschallsensors sowie der Abstand zwischen dem zweiten Ultraschallwandler des ersten Ultraschallsensors und dem ersten Ultraschallwandler des zweiten Ultraschallsensors gleich ist.

Gemäß Ausführungsbeispielen ist die Steuerung wirksam, um während einer ersten Messung einen Ultraschallwandler des ersten Ultraschallsensors anzusteuern, um ein erstes Ultraschallsignal auszusenden, und um die Ultraschallwandler des zweiten Ultraschallsensors anzusteuern, um jeweils das erste Ultraschallsignal zu empfangen, um während einer zweiten Messung einen Ultraschallwandler des zweiten Ultraschallsensors anzusteuern, um ein zweites Ultraschallsignal auszusenden und um die Ultraschallwandler des ersten Ultraschallsensors anzusteuern, um jeweils das zweite Ultraschallsignal zu empfangen, und um basierend auf den an den an den Ultraschallwandlern des ersten Ultraschallsensors empfangenen zweiten Ultraschallsignalen und den an den Ultraschallwandlern des zweiten Ultraschallsensors empfangenen ersten Ultraschallsignalen eine Mehrzahl von Abstandswerten zu erzeugen.

Gemäß Ausführungsbeispielen ist die Steuerung wirksam, um basierend auf einer Differenz der an den Ultraschallwandlern des ersten Ultraschallsensors empfangenen zweiten

Ultraschallsignalen und basierend auf einer Differenz der an den Ultraschallwandlern des zweiten Ultraschallsensors empfangenen ersten Ultraschallsignalen ein oder mehrere Temperaturkompensationssignale zu erzeugen.

Gemäß Ausführungsbeispielen ist die Steuerung wirksam, um basierend auf den Abstandswerten eine Plausibilitätsbeurteilung der Messung durchzuführen.

Die vorliegende Erfindung schafft ferner eine mobile Maschine, mit einem ausfahrbaren Maschinenteil, und der erfindungsgemäßen Vorrichtung zum Bestimmen einer Ausfahrlänge eines ausfahrbaren Maschinenteils

Gemäß Ausführungsbeispielen umfasst das ausfahrbare Maschinenteil eine oder mehrere Stützen, einen oder mehrere Stempel, ein Arbeitswerkzeug, eine Hebebühne und/oder einen Teleskopzylinder.

Ausführungsbeispiele der vorliegenden Erfindung schaffen somit eine Vorrichtung, die im Gegensatz zu der Ausgestaltung, wie sie aus der DE 10 2008 048 307 A1 bekannt ist, einen stationären oder beweglichen Ultraschallsensor aufweist, der zwei Ultraschallwandler bzw. -schwinger umfasst, die in der Messrichtung, also der Richtung, in der Ultraschallsignale ausgesendet bzw. empfangen werden, versetzt zueinander angeordnet sind, beispielsweise durch Anordnung der entsprechenden Ultraschallschwinger bzw. Ultraschallwandler in einem entsprechend ausgebildeten Gehäuse.

Gemäß Ausführungsbeispielen ist ein Ultraschallsensorpaar vorgesehen, welches einen ersten und einen zweiten Ultraschallsensor aufweist, die gegenüberliegend angeordnet sind, und die jeweils zwei zueinander versetzt angeordnete Ultraschallwandler aufweisen. Ansprechend auf ein Steuersignal einer Auswertungselektronik bzw. Steuerung sendet der erste Ultraschallwandler anfänglich ein Ultraschallsignal aus, welches durch die beiden gegenüberliegenden Wandler des zweiten Sensors empfangen wird. Mit dem Ausgeben des Ultraschallsignals wird ein Zeitnehmer gestartet, der bei Empfang des Ultraschallsignals angehalten wird, so dass durch die Auswertungselektronik bzw. die Steuerung die Entfernung aufgrund der Laufzeit des Ultraschallsignals berechnet werden kann. Ferner wird gemäß diesem Ausführungsbeispiel ermöglicht, aus der Differenz der Laufzeiten der an den beiden versetzten Wandler empfangenen Ultraschallsignale die Umgebungstemperatur abzuleiten, da der Abstand zwischen den zwei Ultraschallwandlern des empfangenen Ultraschallsensors fest und konstant ist. Nach einer festgelegten Pause kann der zweite Ultraschallwandler nunmehr ein Signal zurück zu dem ersten Wandler aussenden. Hierzu wird einer der Wandler des zweiten Sensors angesteuert, um ein Ultraschallsignal auszugeben, welches dann durch die zwei Wandler des ersten Sensors erfasst wird, die dann wiederum basierend auf den empfangenen Signalen den Abstand berechnen können und eine weitere Temperaturmessung auslösen können. Hieraus ergeben sich zwei Messwerte sowie entsprechende Temperaturkompensationsmesswerte, die bei der Bestimmung der Ausfahrlänge einbezogen werden können. Auch eine Plausibilitätsüberprüfung der erhaltenen Abstandsmesswerte kann basierend auf den zwei Messungen durchgeführt werden.

Zur Erhöhung der Sicherheit kann erfindungsgemäß vorgesehen sein, eine weitere Messung zu starten, wobei dieselben Messungen durchgeführt wurden, die oben beschrieben wurden, wobei jedoch die Ultraschallsignale nunmehr durch die zweiten Wandler der zwei Ultraschallsensoren bzw. Sende/Empfangseinheiten ausgegeben werden, so dass vier Messungen vorliegen, die auf Plausibilität überprüft werden können bzw. auch getrennt ausgegeben werden können.

Somit offenbaren Ausführungsbeispiele der Erfindung eine Vorrichtung zur Längenmessung von Teleskopzylindern, Stützen oder Stempeln, wobei die Vorrichtung einen Ultraschallsensor mit mindestens zwei Ultraschallwandlern mit dazugehöriger Elektronik zum Senden und Empfangen von Ultraschallsignalen zur Laufzeitmessung umfasst, wobei die zwei Ultraschallwandler in Messrichtung versetzt angeordnet sind. Jeweils ein Ultraschallwandler kann ein Ultraschallsignal aussenden, welches von den zwei gegenüberliegenden Wandlern empfangen wird. Die Sensoren können auch wechselseitig betrieben werden, um abwechselnd zu senden und zu empfangen, um die oben beschriebene verbesserte Betriebssicherheit und Genauigkeit zu erhalten.

Gemäß anderen Ausführungsbeispielen kann vorgesehen sein, nur einen Ultraschallsensor umfassend die zwei Wandler, die versetzt zueinander angeordnet sind, vorzusehen, und durch einen der Wandler ein Signal auszusenden, welches bei Auftreffen auf ein Objekt zurückreflektiert wird, wobei dann beide Wandler des Sensors vorgesehen sind, um das reflektierte Signal zu erfassen.

Ausführungsbeispiele der vorliegenden Erfindung werden nachfolgend unter Bezugnahme auf die beiliegenden Zeichnungen näher erläutert. Es zeigen:
- Fig. 1: einen mobilen Kran als ein Beispiel für eine bekannte Maschine mit einem ausfahrbaren Maschinenteil;
- Fig. 2: eine isometrische Darstellung eines Ultraschallsensors gemäß einem Ausfiihrungsbeispiel der vorliegenden Erfindung;
- Fig. 3: eine schematische Darstellung einer Anordnung des Sensors gemäß Fig. 2 an einem mobilen Kran, wie er in Fig. 1 gezeigt ist, gemäß einem Ausführungsbeispiel der vorliegenden Erfindung;
- Fig. 4: eine schematische Darstellung einer Anordnung des Sensors gemäß Fig. 2 ähnlich wie in Fig. 3, wobei ein zusätzlicher Ultraschallsensor vorgesehen ist;
- Fig. 5: eine isometrische Darstellung einer Ultraschallmessvorrichtung gemäß einem weiteren Ausführungsbeispiels der vorliegenden Erfindung, die zwei Sensoren gemäß Fig. 2 umfasst;
- Fig. 6: eine Vorrichtung ähnlich der in Fig. 3, die die Sensoranordnung gemäß Fig. 5 aufweist; und
- Fig. 7: eine Sensoranordnung ähnlich der, die in der Fig. 6 gezeigt ist, wobei die Sensoren allerdings so angeordnet sind, dass eine Vergrößerung des Abstands zwischen denselben auftritt, wenn eine Stütze ausgefahren wird.

In der nachfolgenden Beschreibung der bevorzugten Ausführungsbeispiele werden gleiche oder ähnliche Elemente mit den gleichen Bezugszeichen versehen.

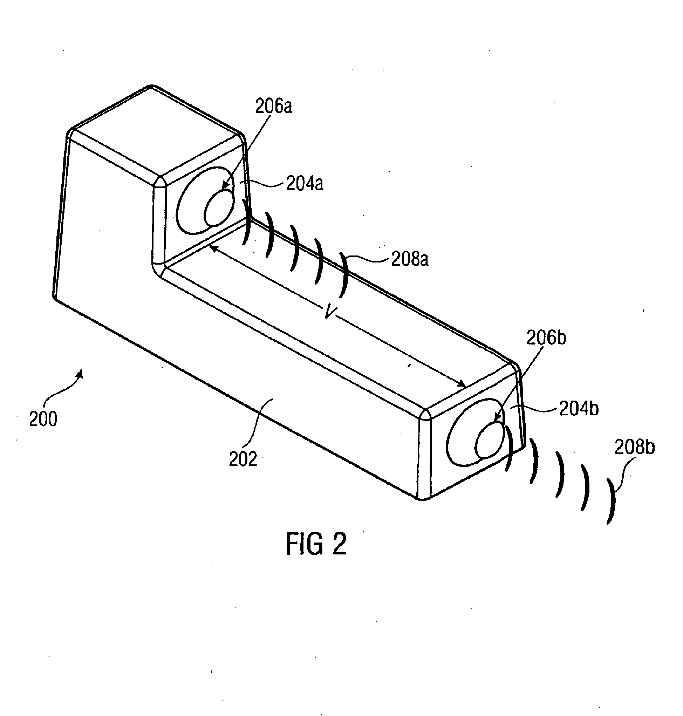

Fig. 2 zeigt eine isometrische Darstellung eines Ultraschallsensors gemäß einem Ausführungsbeispiel der vorliegenden Erfindung. Der Ultraschallsensor 200 umfasst einen Träger 202, der bei dem dargestellten Ausführungsbeispiel einen L-förmigen Querschnitt aufweist. Der Träger 202 umfasst zwei in Messrichtung gerichtete Oberflächen 204a, 204b, auf oder an denen ein erster Ultraschallwandler 206a und ein zweiter Ultraschallwandler 206b angeordnet sind. Die Ultraschallwandler 206a, 206b sind auf den Flächen 204a, 204b angeordnet. Alternativ können die Wandler aber auch in dem Körper des Trägers 202 so eingebettet sein, dass eine Abstrahlung der Ultraschallenergie senkrecht zu den Flächen 204a, 204b erfolgt, wie es durch die in Fig. 2 schematisch dargestellten Ultraschallsignale 208a, 208b dargestellt ist. Die Flächen 204a, 204b haben in Messrichtung einen Abstand V, so dass die Ultraschallwandler 206a, 206b um den festen Versatz V zueinander angeordnet sind. Anstelle des in Fig. 2 gezeigten Trägers 202 können auch anders geformte Träger vorgesehen sein, sofern eine Abstrahlung der Ultraschallenergie 208a, 208b in die gleiche Richtung der entsprechenden Sensoren mit einem Versatz zueinander möglich ist.

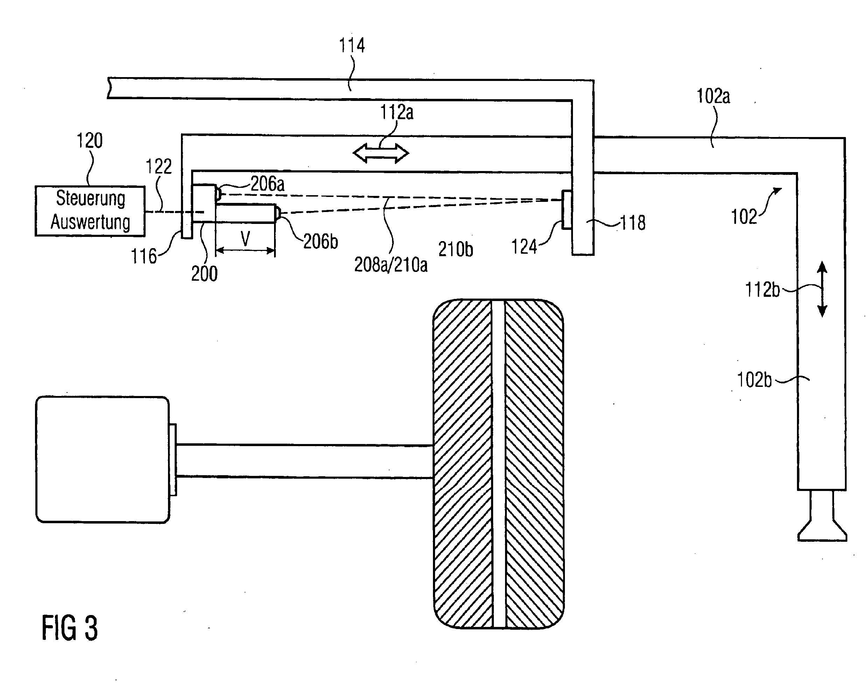

Die Funktionalität des anhand der Fig. 2 gezeigten Sensors wird nachfolgend anhand der Fig. 3 näher erläutert. Die Fig. 3 zeigt ein Beispiel für eine Anordnung des Sensors 200 an einem mobilen Kran, wie er in Fig. 1 gezeigt ist. In Fig. 3 ist schematisch der horizontale Stempel 102a dargestellt, sowie der vertikale Stempel 102b. Wie durch die Pfeile 112a, 112b angedeutet ist, ist der horizontale Stempel 102a horizontal verschiebbar, und der vertikale Stempel 102b ist vertikal verschiebbar. In Fig. 3 ist ferner ein Teil des Chassis 114 gezeigt, an dem die Stütze 102 auf bekannte Art und Weise beweglich angeordnet ist. Der horizontale Stempel 102a umfasst einen innerhalb des Chassis 114 angeordneten, sich nach unten erstreckenden Vorsprung 116, an dem ein Ultraschallsensor 200, wie er anhand der Fig. 2 beschrieben wurde, befestigt ist. Das Chassis 114 umfasst einen sich ebenfalls nach unten erstreckenden Abschnitt 118, und der Sensor 200 ist derart an dem Vorsprung 116 angeordnet, dass Ultraschallsignale bzw. -energie, die von einem der Sensoren 206a, 206b abgestrahlt werden, auf den Abschnitt 118 des Chassis 114 auftreffen, und von diesem zurück zum Sensor 200 reflektiert werden. Die reflektierte Ultraschallenergie wird von den Ultraschallwandlern 206a, 206b des Ultraschallsensors 200 empfangen.

Ferner ist eine Steuerung/Auswertung 120 vorgesehen, die mit dem Sensor 200 wirksam verbunden ist, wie dies schematisch durch die gestrichelte Linie 122 angedeutet ist. Die Steuerung 120 kann mit dem Ultraschallsensor 200 über eine elektrische Verbindung, beispielsweise einen CAN-Bus, verbunden sein. Die von dem Ultraschallsensor 200 abgegebene Ultraschallenergie kann durch den Abschnitt 118 des Chassis 114 direkt reflektiert werden. Gemäß Ausführungsbeispielen kann aber auch vorgesehen sein, einen Reflektor 124 vorzusehen, der eine Reflexion der Ultraschallenergie zurück in Richtung des Ultraschallsensors 200 unterstützt.

Bei dem in Fig. 3 gezeigten Ausführungsbeispiel ist der Sensor 200 an dem beweglichen Stempel 102 angeordnet, und sendet Ultraschallenergie in Richtung des Chassisabschnitts 118 ab und empfängt die von diesem reflektierte oder Schallenergie. Alternativ kann auch vorgesehen sein, den Sensor 200 am Chassis 114 zu befestigen, und die Ultraschallenergie auf den Abschnitt 116 der beweglichen Stütze 102 zu richten und von diesem Vorsprung 116 reflektierte Ultraschallenergie zu empfangen.

Nachfolgend sei die Funktionalität der anhand der Fig. 3 beschriebenen Anordnung näher erläutert. Die Steuerung 120 arbeitet derart, dass in einem ersten Schritt zunächst einer der Ultraschallwandler 206a, 206b des Sensors 200 aktiviert wird, beispielsweise der Wandler 206a, um ein erstes Ultraschallsignal 208a auszusenden, welches auf den Reflektor 124 bzw. auf den Abschnitt 118 auftrifft und an diesem reflektiert wird. Nach dem Aussenden des Ultraschallsignals 208a bewirkt die Steuerung 120, dass die Ultraschallwandler 206a, 206b in den Empfangsbetrieb umgeschaltet werden, um die von dem Chassis 114 reflektierte Ultraschallenergie 210a, 210b zu empfangen. Gleichzeitig mit dem Aussenden des Ultraschallsignals 208a wird ein Zeitgeber in Betrieb gesetzt, der bei Empfang der Ultraschallenergie an den umgeschalteten Wandlern 206a und 206b wieder gestoppt wird. Hierdurch kann zum einen die Laufzeit T1 des Ultraschallsignals von dem Wandler 206a zu dem Abschnitt 118 und zurück zum Wandler 206a, sowie die Laufzeit T2 vom Wandler 206a zum Abschnitt 118 und zurück zum Wandler 206b bestimmt werden. Aus den Laufzeitmessungen T1 und T2 kann dann durch die Steuerung/Auswertung 120 ein Abstand zwischen dem Sensor 200 und dem Abschnitt 118 gemessen werden und hieraus kann die Ausfahrlänge der Stütze 102 bestimmt werden. Genauer gesagt kann basierend auf der Laufzeit T1 die Ausfahrlänge bestimmt werden, und ebenso basierend auf der Laufzeit T2, wobei hier aufgrund des bekannten Abstandes V zwischen den Wandlern 206a und 206b trotz der kürzeren Laufzeit T2 eine der Laufzeit T1 entsprechende Ausfahrlänge bestimmt werden kann. Die zwei erhaltenen Ausfahrlängen können hinsichtlich ihrer Plausibilität überprüft werden, das heißt es kann überprüft werden, inwieweit die beiden unabhängigen Messungen zu Abständen führen, die innerhalb einer bestimmten Toleranzschwelle liegen, beispielsweise um weniger als 10% voneinander abweichen, und nur in diesem Fall wird die Messung als zuverlässig angesehen.

Ferner ermöglicht der erfindungsgemäße Sensor 200 aufgrund der versetzten Anordnung der Wandler 206a und 206b eine Bestimmung der Umgebungstemperatur bzw. ermöglicht eine Kompensation möglicher Temperaturschwankungen basierend auf einer Differenz der Laufzeit der Signale. Liegt eine konstante Temperatur vor, so ergibt sich ein Laufzeitunterschied zwischen den reflektierten Signalen 210a, 210b aufgrund des Abstandes V, wobei der Unterschied einem entsprechenden Sollwert entspricht, der aus dem Abstand V, einer vorgegebenen Temperatur und einem entsprechenden Ultraschallsignal berechnet werden kann. Bei sich ändernden Temperaturen ändern sich auch die Ausbreitungseigenschaften der Ultraschallenergie, so dass der Unterschied zwischen den Laufzeiten T1 und T2 von dem Sollwert abweicht, woraus auf eine entsprechende Temperaturänderung geschlossen werden kann.

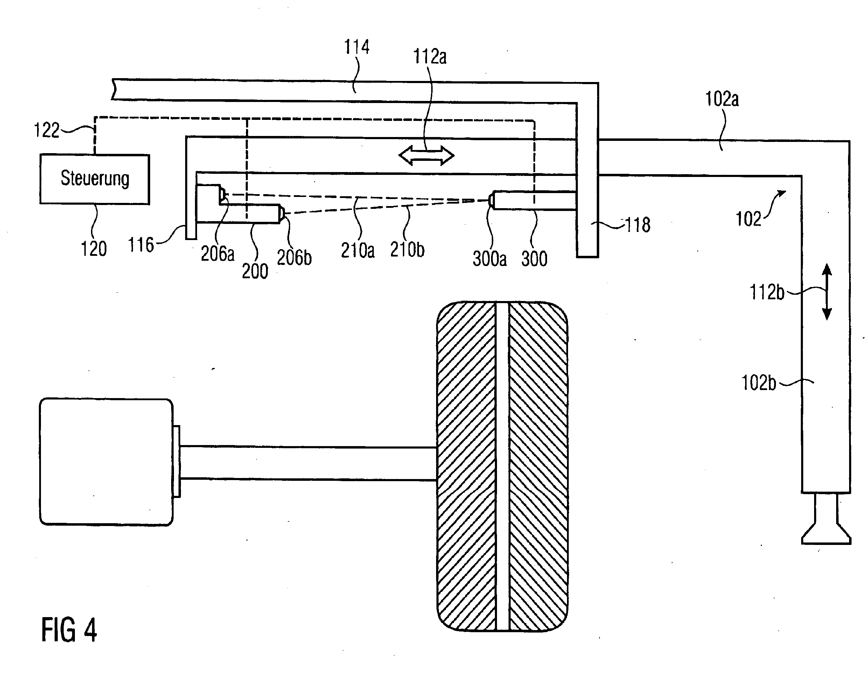

Anhand der Fig. 4 wird ein weiteres Ausführungsbeispiel beschrieben, welches einen weiteren Ultraschallsensor 300 aufweist. Die Steuerung 120 ist über die Verbindung 122 sowohl mit dem ersten Ultraschallsensor 200 als auch mit dem zweiten Ultraschallsensor 300 verbunden, um diese wirksam anzusteuern und um gleichzeitig entsprechende Messsignale von diesen zu erhalten. Der weitere Ultraschallsensor 300 umfasst einen einzigen Wandler 300a, der ein Ultraschallsignal abgibt, welches durch die Wandler 206a und 206b des Sensors 200 empfangen wird, wie dies durch die Signale 210a und 210b schematisch dargestellt ist. Der Sensor 300 ist an dem Abschnitt 118 des Chassis 114 angeordnet. Die Funktionalität des Systems gemäß Fig. 4 ist im Wesentlichen gleich der Funktionalität, wie sie oben anhand der Fig. 3 beschrieben wird, mit dem Unterschied, dass die Steuerung 120 bewirkt, dass der Sensor 300 ein Ultraschallsignal 210a, 210b ausstrahlt, welches durch die Wandler 206a, 206b des Sensors 200 erfasst wird, so dass basierend auf den erfassten Signalen die oben beschriebenen Laufzeiten T1 und T2 bestimmt werden können, und hieraus zum einen der Abstand zwischen den Sensoren und zum anderen eine mögliche Temperaturänderung.

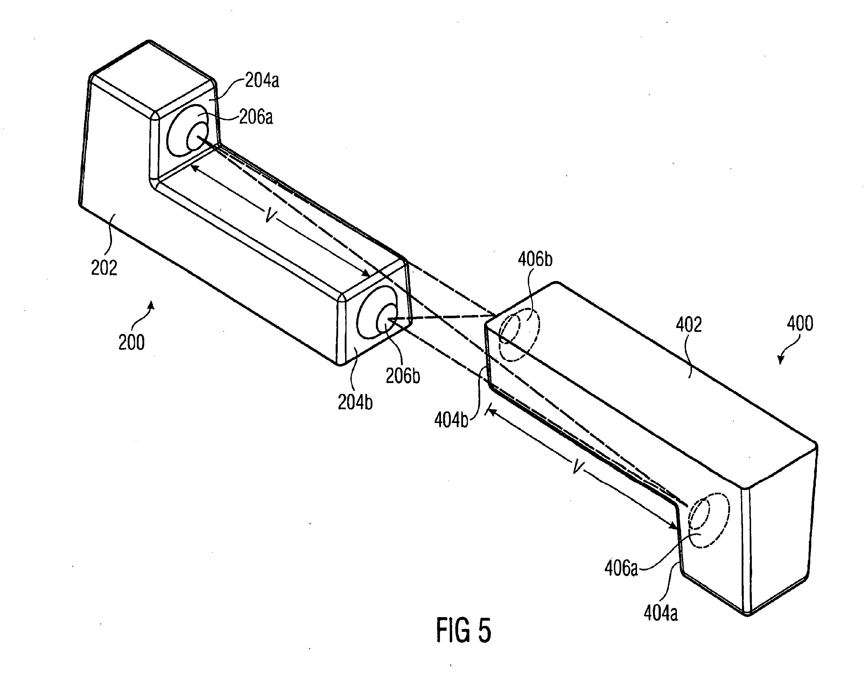

Fig. 5 zeigt ein weiteres Ausführungsbeispiel gemäß der vorliegenden Erfindung bei dem eine Sensoranordnung zwei Sensoren aus Fig. 2 verwendet. Die in Fig. 5 gezeigte Sensoranordnung umfasst den ersten Sensor 200, der bereits anhand der Fig. 2 beschrieben wurde sowie einen baugleichen zweiten Sensor 400, der ebenfalls einen Träger 402 sowie die Flächen 404a und 404b und die diesbezüglich angeordneten Ultraschallwandler 406a und 406b umfasst. Die zwei Sensoren 200 und 400 sind derart zueinander ausgerichtet, dass die Flächen 204a, 204b und 404a, und 404b einander gegenüberliegen, und damit auch die entsprechenden Sensoren 206a, 206b bzw. 406a, 406b. Wie beim ersten Sensor 200 sind auch beim zweiten Sensor 400 die Sensoren 406a, 406b um die gleiche Entfernung V voneinander beabstandet. Die Sensoren 200 und 400 sind auf die in Fig. 5 gezeigte Art und Weise zueinander ausgerichtet, nämlich so, dass die Abstände zwischen den Sensoren 206a und 406b bzw. der Abstand zwischen den Sensoren 206b und 406a gleich ist.

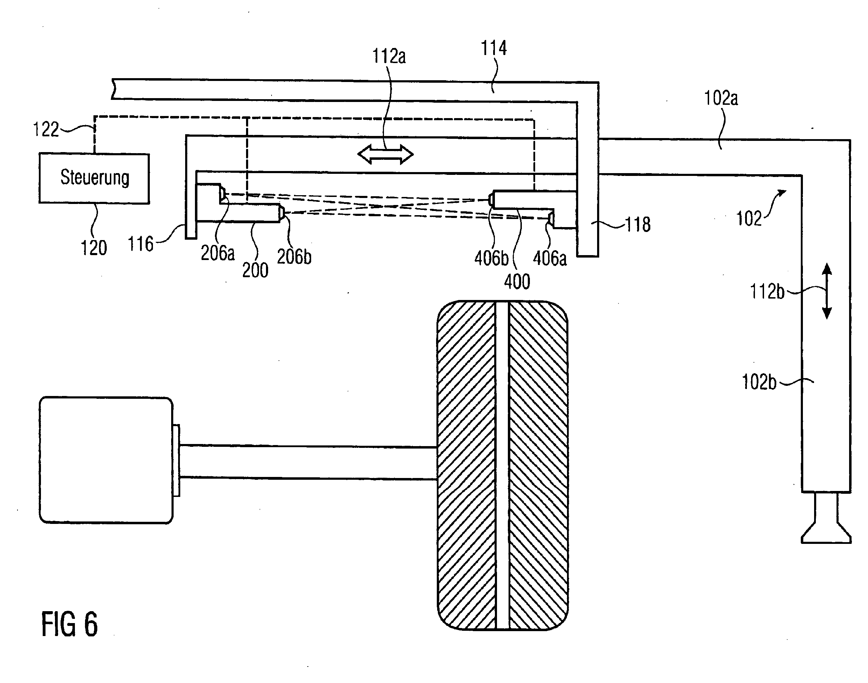

Fig. 6 zeigt eine Vorrichtung ähnlich zu Fig. 3, bei der die Sensoranordnung gemäß Fig. 5 verwendet wird. Wie zu erkennen ist, ist der erste Sensor 200 am Vorsprung 116 der horizontalen Strebe 102a befestigt, und der zweite Sensor 400 ist am Vorsprung 118 des Chassis 114 befestigt, auf eine Art und Weise, dass die Abstände zwischen den entsprechenden ersten und zweiten Wandlerelementen 206a, 406b bzw. 206b, 406a gleich sind.

Nachfolgend wird die Funktionalität der anhand der in Figur 6 gezeigten Erfassungsvorrichtung näher erläutert. Die Steuerung 120 ist wirksam, um die Ultraschallsensoren 200 und 400 anzusteuern, um diese entweder im Empfangsbetrieb oder im Sendebetrieb zu betreiben. Zu Beginn einer Messung bewirkt die Steuerung 120, dass der Ultraschallsensor 200 im Sendebetrieb arbeitet, und einer der Ultraschallwandler, beispielsweise der Ultraschallwandler 206a, wird angesteuert, um ein Ultraschallsignal in Richtung des zweiten Sensors 400 auszusenden. Gleichzeitig mit dem Aussenden des Ultraschallsignals startet die Steuerung 120 den Zeitgeber und steuert ferner den zweiten Ultraschallsensor an, so dass dieser im Empfangsbetrieb ist. Die Ultraschallwandler 406a, 406b des zweiten Ultraschallsensors 400 empfangen das vom Ultraschallwandler 206a ausgesendete Ultraschallsignal, und mit Empfang der Signale am Ultraschallsensor 400 stoppt die Steuerung 120 den Zeitgeber, wodurch die oben erwähnten Laufzeiten T1 und T2 bestimmt werden. Aus den Laufzeiten wird die Entfernung zwischen den Sensoren 200 und 400 und damit die Ausfahrlänge des Elements 102 bestimmt. Ferner wird auf die oben beschriebene Art und Weise aufgrund der Differenz der Laufzeiten ein Messwert betreffend die Umgebungstemperatur abgeleitet, um, soweit erforderlich, eine Temperaturkompensation der Messwerte durchzuführen. Nach einer vorbestimmten Pause bewirkt die Steuerung 120 ein Umschalten der Funktionalität der Ultraschallsensoren 200 und 400 derart, dass nunmehr der Ultraschallsensor 200 im Empfangsbetrieb ist, und der Ultraschallsensor 400 im Sendebetrieb ist. Die Steuerung bewirkt ferner, dass einer der Ultraschallwandler des zweiten Ultraschallsensors 400, beispielsweise der Ultraschallwandler 406b, ein Ultraschallsignal aussendet, welches von den jetzt im Empfangsbetrieb arbeitenden Ultraschallwandlern 206a, 206b des ersten Ultraschallwandlers 200 empfangen wird. Mit dem Aussenden des Ultraschallsignals wird wiederum ein Zeitgeber gestartet, um so die Empfangszeit und damit die Laufzeiten T1 und T2, wie oben beschrieben, zu erfassen, um hieraus den Abstand zu berechnen und gegebenenfalls eine weitere Temperaturkompensation auszulösen.

Zu Erhöhung der Sicherheit kann vorgesehen sein, zumindest eine weitere Messung zu starten, die der oben beschriebenen Messung entspricht, und die sich aus den vier Messungen ergebenden Messwerte können auf Plausibilität überprüft werden oder können getrennt ausgegeben werden. Bei dieser weiteren Messung werden die Sensoren so angesteuert, dass die Ultraschallsignale von den anderen der Wandler (die bei der ersten Messung nicht zum Aussenden der Ultraschallsignale verwendet wurden) ausgesendet werden.

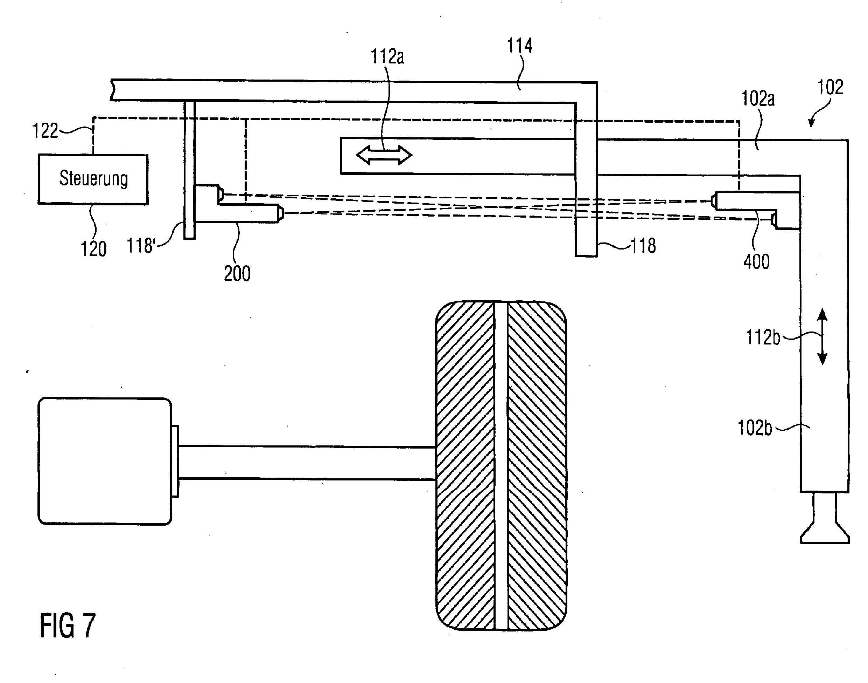

Bei den oben anhand der Figuren 3, 4 und 6 beschriebenen Ausführungsbeispielen waren die Elemente der Sensoranordnung derart angeordnet, dass beim Ausfahren des Elements 102 der Abstand zwischen den Elementen der Sensoranordnung kleiner wird. Die vorliegende Erfindung ist aber nicht auf eine Ausgestaltung beschränkt, vielmehr können die Sensorelemente auch so angeordnet sein, dass sich beim Ausfahren der Abstand zwischen den Sensorelementen vergrößert. Ein Beispiel für eine solche Ausgestaltung wird anhand der Fig. 7 erläutert, die eine Sensoranordnung zeigt, die ähnlich der ist, die anhand der Fig. 6 beschrieben wurde, mit Ausnahme der Tatsache, dass die Sensoren so angeordnet sind, dass eine Vergrößerung des Abstands zwischen denselben auftritt, wenn die Stütze 102 ausgefahren wird. Es sei darauf hingewiesen, dass der anhand der Fig. 7 beschriebene Ansatz ebenso für die Ansätze anwendbar ist, die anhand der Figuren 3 und 4 beschrieben wurden. In Fig. 7 ist gezeigt, dass der erste Sensor 200 an einem weiteren Abschnitt 118' des Chassis stationär angeordnet ist, beabstandet vom Abschnitt 118, und dass der zweite Sensor 400 an der Stütze 102 angeordnet ist. Bei der anhand der Fig. 7 gezeigten Ausgestaltung bewirkt ein Ausfahren der Stütze 102 eine Vergrößerung des Abstands zwischen den Sensoren 200 und 400.

Ausführungsbeispiele der Erfindung wurden oben basierend auf Stützen von mobilen Maschinen beschrieben, jedoch sei darauf hingewiesen, dass der erfindungsgemäße Ansatz nicht hierauf beschränkt ist. Anstelle der Ausfahrlänge in horizontaler Richtung kann eine entsprechende Sensorvorrichtung vorgesehen sein, um beispielsweise eine vertikale Bewegung der vertikalen Stempel 102b zu erfassen. Ebenso kann vorgesehen sein, die Ausfahrlänge eines Teleskopzylinders zu erfassen, der beispielsweise zum Ausrichten bzw. Absinken eines Kranarms bzw. zum Ausfahren von Kranarmsegmenten und zum Bewegen einer Hebebühne vorgesehen ist.

Ausführungsbeispiele der Erfindung wurden oben basierend auf einem Sensor beschreiben, der zwei zueinander versetzte Ultraschallwandler umfasst, jedoch ist der erfindungsgemäße Ansatz nicht hierauf beschränkt. Alternative kann der Sensor auch drei oder mehr Ultraschallwandler aufweisen, um zu ermöglichen, durch eine Messung noch mehr Messwerte zu erhalten. Zumindest zwei der Ultraschallwandler sind in Messrichtung versetzt zueinander angeordnet. Alternativ können auch die einige oder alle der weiteren Ultraschallwandler in Messrichtung zueinander versetzt angeordnet sein, mit jeweils gleichem Versatz oder mit unterschiedlichen Versätzen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung zum Bestimmen einer Ausfahrlänge eines ausfahrbaren Maschinenteils, mit:
einem ersten Ultraschallsensor (200), der einen ersten Ultraschallwandler (206a) und einen zweiten Ultraschallwandler (206b) umfasst; und
einer Steuerung (120), die ausgebildet ist, um basierend auf einem durch den ersten Ultraschallsensor (200) empfangenen Ultraschallsignal die Ausfahrlänge (L) zu bestimmen,
**dadurch gekennzeichnet,**
**dass** der erste Ultraschallwandler (206a) und der zweite Ultraschallwandler (206b) in die selbe Messrichtung gerichtet sind und entlang der Messrichtung um einen festen Versatz (V) versetzt angeordnet sind.

2. Vorrichtung nach Anspruch 1, bei der der erste Ultraschallsensor (200) einen Träger (202) umfasst, auf dem der erste Ultraschallwandler (206a) und der zweite Ultraschallwandler (206b) angeordnet sind.

3. Vorrichtung nach Anspruch 2, bei der der Träger (202) zwei in Messrichtung gerichtete Flächen (204a, 204b) aufweist, an denen der erste Ultraschallwandler (206a) und der zweite Ultraschallwandler (206b) angeordnet sind.

4. Vorrichtung nach Anspruch 2 oder 3, bei der der Träger (202) im Querschnitt L-förmig ist.

5. Vorrichtung nach einem der Ansprüche 1 bis 4, bei der die Steuerung (120) ausgebildet ist, um basierend auf den durch den ersten Ultraschallwandler (206a) und den zweiten Ultraschallwandler (206b) empfangenen Ultraschallsignalen die Ausfahrlänge (L) zu bestimmen.

6. Vorrichtung nach einem der Ansprüche 1 bis 5, bei der der die Steuerung (120) ausgebildet ist, um basierend auf dem Versatz (V) zwischen dem ersten Ultraschallwandler (206a) und dem zweiten Ultraschallwandler (206b) und basierend auf einer Differenz der Laufzeiten der durch den ersten Ultraschallwandler (206a) und den zweiten Ultraschallwandler (206b) empfangenen Ultraschallsignale eine Umgebungstemperatur abzuleiten.

7. Vorrichtung nach einem der Ansprüche 1 bis 6, bei der die Steuerung (120) ausgebildet ist, um den ersten Ultraschallsensor (200) zum wahlweisen Senden und Empfangen von Ultraschallsignalen anzusteuern.

8. Vorrichtung nach einem der Ansprüche 1 bis 7, bei der die Steuerung (120) ausgebildet ist, um
den ersten Ultraschallsensor (200) anfänglich anzusteuern, um ein Ultraschallsignal auszusenden, und
den ersten Ultraschallsensor (200) nach dem Aussenden des Ultraschallsignals anzusteuern, um durch den ersten Ultraschallwandler (206a) und durch den zweiten Ultraschallwandler (206b) ein reflektiertes Ultraschallsignal zu empfangen.

9. Vorrichtung nach Anspruch 8, bei der der erste Ultraschallsensor (200) stationär angeordnet ist, oder angeordnet ist, um sich ansprechend auf eine Bewegung des ausfahrbaren Maschinenteils zu bewegen.

10. Vorrichtung nach einem der Ansprüche 1 bis 7, mit:
einem zweiten Ultraschallsensor (300, 400),
wobei die Steuerung (120) ausgebildet ist, um
den zweiten Ultraschallsensor (300, 400) anzusteuern, um ein Ultraschallsignal in Richtung des ersten Ultraschallsensors (200) auszusenden, und
den ersten Ultraschallsensor (200) anzusteuern, um das von dem zweiten Ultraschallsensor (300, 400) ausgesendete Ultraschallsignal durch den ersten Ultraschallwandler (206a) und den zweiten Ultraschallwandler (206b) des ersten Ultraschallsensors (200) zu empfangen.

11. Vorrichtung nach Anspruch 10, bei der einer der Ultraschallsensoren (200, 300, 400) stationär angeordnet ist, und der andere der Ultraschallsensoren (200, 300, 400) angeordnet ist, um sich ansprechend auf eine Bewegung des ausfahrbaren Maschinenteils zu bewegen.

12. Vorrichtung nach Anspruch 10, bei der die Ultraschallsensoren (200, 300, 400) so angeordnet sind, dass sich deren Abstand vergrößert oder verkleinert, je weiter das ausfahrbare Maschinenteil ausgefahren ist.

13. Vorrichtung nach einem der Ansprüche 10 bis 12, bei der der zweite Ultraschallsensor (400) einen ersten Ultraschallwandler (406a) und einen zweiten Ultraschallwandler (406b) umfasst, die entlang der Messrichtung versetzt angeordnet sind, und bei der die Steuerung (120) ausgebildet ist, um einen der Ultraschallwandler (406a, 406b) des zweiten Ultraschallsensors (400) zum Aussenden des Ultraschallsignals anzusteuern.

14. Vorrichtung nach Anspruch 13, bei der der Versatz der Ultraschallwandler (206a, 206b) des ersten Ultraschallsensors (200) und der Versatz der Ultraschallwandler (406a, 406b) des zweiten Ultraschallsensors (400) gleich ist, und bei der der erste Ultraschallsensor (200) und der zweite Ultraschallsensor (400) so angeordnet sind, dass der Abstand zwischen dem ersten Ultraschallwandler (206a) des ersten Ultraschallsensors (200) und dem zweiten Ultraschallwandler (406b) des zweiten Ultraschallsensors (400) sowie der Abstand zwischen dem zweiten Ultraschallwandler (206b) des ersten Ultraschallsensors (200) und dem ersten Ultraschallwandler (406a) des zweiten Ultraschallsensors (400) gleich ist.

15. Vorrichtung nach Anspruch 13 oder 14, bei der die Steuerung (120) wirksam ist, um
während einer ersten Messung einen Ultraschallwandler (206a, 206b) des ersten Ultraschallsensors (200) anzusteuern, um ein erstes Ultraschallsignal auszusenden, und um die Ultraschallwandler (406a, 406b) des zweiten Ultraschallsensors (400) anzusteuern, um jeweils das erste Ultraschallsignal zu empfangen,
während einer zweiten Messung einen Ultraschallwandler (406a, 406b) des zweiten Ultraschallsensors (400) anzusteuern, um ein zweites Ultraschallsignal auszusenden und um die Ultraschallwandler (206a, 206b) des ersten Ultraschallsensors (200) anzusteuern, um jeweils das zweite Ultraschallsignal zu empfangen, und
basierend auf den an den an den Ultraschallwandlern (206a, 206b) des ersten Ultraschallsensors (200) empfangenen zweiten Ultraschallsignalen und den an den Ultraschallwandlern (406a, 406b) des zweiten Ultraschallsensors (400) empfangenen ersten Ultraschallsignalen eine Mehrzahl von Abstandswerten zu erzeugen.

16. Vorrichtung nach Anspruch 15, bei der die Steuerung (120) wirksam ist, um basierend auf einer Differenz der an den Ultraschallwandlern (206a, 206b) des ersten Ultraschallsensors (200) empfangenen zweiten Ultraschallsignalen und basierend auf einer Differenz der an den Ultraschallwandlern (406a, 406b) des zweiten Ultraschallsensors (400) empfangenen ersten Ultraschallsignalen ein oder mehrere Temperaturkompensationssignale zu erzeugen.

17. Vorrichtung nach Anspruch 15 oder 16, bei der die Steuerung (120) wirksam ist, um basierend auf den Abstandswerten eine Plausibilitätsbeurteilung der Messung durchzuführen.

18. Mobile Maschine, mit:
einem ausfahrbaren Maschinenteil, und
einer Vorrichtung nach einem der Ansprüche 1 bis 17.

19. Mobile Maschine nach Anspruch 18, bei der das ausfahrbare Maschinenteil eine oder mehrere Stützen, einen oder mehrere Stempel, ein Arbeitswerkzeug, eine Hebebühne und/oder einen Teleskopzylinder umfasst.

## Claims

1. Device for determining an extension length of an extendable machine part, comprising:
a first ultrasound sensor (200) including a first ultrasound converter (206a) and a second ultrasound converter (206b); and
a controller (120) configured to determine the extension length (L) on the basis of an ultrasound signal received by the first ultrasound sensor (200),
**characterized in that**
the first ultrasound converter (206a) and the second ultrasound converter (206b) are directed towards the same measuring direction and are offset along the measuring direction by a fixed offset (V).

2. Device as claimed in claim 1, wherein the first ultrasound sensor (200) includes a carrier (202) which has the first ultrasound converter (206a) and the second ultrasound converter (206b) arranged thereon.

3. Device as claimed in claim 2, wherein the carrier (202) comprises two surfaces (204a, 204b) aligned in the measuring direction and having the first ultrasound converter (206a) and the second ultrasound converter (206b) arranged thereon.

4. Device as claimed in claim 2 or 3, wherein the carrier (202) is L-shaped in cross-section.

5. Device as claimed in any of claims 1 to 4, wherein the controller (120) is configured to determine the extension length (L) on the basis of the ultrasound signals received by the first ultrasound converter (206a) and the second ultrasound converter (206b).

6. Device as claimed in any of claims 1 to 5, wherein the controller (120) is configured to derive an ambient temperature on the basis of the offset (V) between the first ultrasound converter (206a) and the second ultrasound converter (206b) and of a difference in the time delays of the ultrasound signals received by the first ultrasound converter (206a) and the second ultrasound converter (206b).

7. Device as claimed in any of claims 1 to 6, wherein the controller (120) is configured to control the first ultrasound sensor (200) to optionally send and receive ultrasound signals.

8. Device as claimed in any of claims 1 to 7, wherein the controller (120) is configured to
initially control the first ultrasound sensor (200) to send out an ultrasound signal, and
control the first ultrasound sensor (200), after the ultrasound signal has been sent out, to receive a reflected ultrasound signal by the first ultrasound converter (206a) and by the second ultrasound converter (206b).

9. Device as claimed in claim 8, wherein the first ultrasound sensor (200) is arranged in a stationary manner or is arranged to move in response to a movement of the extendable machine part.

10. Device as claimed in any of claims 1 to 7, comprising:
a second ultrasound sensor (300, 400),
the controller (120) being configured to
control the second ultrasound sensor (300, 400) to send out an ultrasound signal in the direction of the first ultrasound sensor (200), and
control the first ultrasound sensor (200) to receive the ultrasound signal, sent out by the second ultrasound sensor (300, 400), by the first ultrasound converter (206a) and the second ultrasound converter (206b) of the first ultrasound sensor (200).

11. Device as claimed in claim 10, wherein one of the ultrasound sensors (200, 300, 400) is arranged in a stationary manner, and the other one of the ultrasound sensors (200, 300, 400) is arranged to move in response to a movement of the extendable machine part.

12. Device as claimed in claim 10, wherein the ultrasound sensors (200, 300, 400) are arranged such that their distance increases or decreases the further the extendable machine part is extended.

13. Device as claimed in any of claims 10 to 12, wherein the second ultrasound sensor (400) includes a first ultrasound converter (406a) and a second ultrasound converter (406b) which are arranged such that they are offset along the measuring direction, and wherein the controller (120) is configured to control one of the ultrasound converters (406a, 406b) of the second ultrasound sensor (400) to send out the ultrasound signal.

14. Device as claimed in claim 13, wherein the offset of the ultrasound converters (206a, 206b) of the first ultrasound sensor (200) and the offset of the ultrasound converters (406a, 406b) of the second ultrasound sensor (400) are identical, and wherein the first ultrasound sensor (200) and the second ultrasound sensor (400) are arranged such that the distance between the first ultrasound converter (206a) of the first ultrasound sensor (200) and the second ultrasound converter (406b) of the second ultrasound sensor (400) as well as the distance between the second ultrasound converter (206b) of the first ultrasound sensor (200) and the first ultrasound converter (406a) of the second ultrasound sensor (400) are identical.

15. Device as claimed in claim 13 or 14, wherein the controller (120) is effective to
control, during a first measurement, an ultrasound converter (206a, 206b) of the first ultrasound sensor (200) to send out a first ultrasound signal, and to control the ultrasound converters (406a, 406b) of the second ultrasound sensor (400) to receive the first ultrasound signal in each case,
control, during a second measurement, an ultrasound converter (406a, 406b) of the second ultrasound sensor (400) to send out a second ultrasound signal, and to control the ultrasound converters (206a, 206b) of the first ultrasound sensor (200) to receive the second ultrasound signal in each case, and
to generate a plurality of distance values on the basis of the second ultrasound signals received at the ultrasound converters (206a, 206b) of the first ultrasound sensor (200) and of the first ultrasound signals received at the ultrasound converters (406a, 406b) of the second ultrasound sensor (400).

16. Device as claimed in claim 15, wherein the controller (120) is effective to generate one or more temperature compensation signals on the basis of a difference between the second ultrasound signals received at the ultrasound converters (206a, 206b) of the first ultrasound sensor (200) and on the basis of a difference between the first ultrasound signals received at the ultrasound converters (406a, 406b) of the second ultrasound sensor (400).

17. Device as claimed in claim 15 or 16, wherein the controller (120) is effective to perform a plausibility evaluation of the measurement on the basis of the distance values.

18. Mobile machine comprising:
an extendable machine part, and
a device as claimed in any of claims 1 to 17.

19. Mobile machine according to claim 18, wherein the extendable machine part includes one or more supports, one or more punches, a work tool, a lifting platform, and/or a telescope cylinder.

## Revendications

1. Dispositif pour déterminer une longueur déployée de la pièce de machine déployable, avec:
un premier capteur à ultrasons (200) comportant un premier transducteur à ultrasons (206a) et un deuxième transducteur à ultrasons (206b); et
un contrôleur (120) qui est réalisé pour déterminer la longueur déployée (L) sur base d'un signal ultrasonore reçu par le premier capteur à ultrasons (200),
**caractérisé par le fait**
**que** le premier transducteur à ultrasons (206a) et le deuxième transducteur à ultrasons (206b) sont orientés dans la même direction de mesure et disposés décalés d'un décalage fixe (V) dans la direction de mesure.

2. Dispositif selon la revendication 1, dans lequel le premier capteur à ultrasons (200) comporte un support (202) sur lequel sont disposés le premier transducteur à ultrasons (206a) et le deuxième transducteur à ultrasons (206b).

3. Dispositif selon la revendication 2, dans lequel le support (202) présente deux faces (204a, 204b) orientées dans la direction de mesure, sur lesquelles sont disposés le premier transducteur à ultrasons (206a) et le deuxième transducteur à ultrasons (206b).

4. Dispositif selon la revendication 2 ou 3, dans lequel le support (202) présente une section en forme de L.

5. Dispositif selon l'une des revendications 1 à 4, dans lequel le contrôleur (120) est réalisé pour déterminer la longueur déployée sur base des signaux ultrasonores (L) reçus par le premier transducteur à ultrasons (206a) et le deuxième transducteur à ultrasons (206b).

6. Dispositif selon l'une des revendications 1 à 5, dans lequel le contrôleur (120) est réalisé pour dériver une température ambiante sur base du décalage (V) entre le premier transducteur à ultrasons (206a) et le deuxième transducteur à ultrasons (206b) et sur base d'une différence entre la durée de propagation des signaux ultrasonores reçus par le premier transducteur à ultrasons (206a) et le deuxième transducteur à ultrasons (206b).

7. Dispositif selon l'une des revendications 1 à 6, dans lequel le contrôleur (120) est réalisé pour activer le premier capteur à ultrasons (200) pour envoyer et recevoir alternativement des signaux ultrasonores.

8. Dispositif selon l'une des revendications 1 à 7, dans lequel le contrôleur (120) est réalisé pour
activer initialement le premier capteur à ultrasons (200) pour émettre un signal ultrasonore, et
activer le premier capteur à ultrasons (200) après l'émission du signal ultrasonore, pour recevoir un signal ultrasonore réfléchi par le premier transducteur à ultrasons (206a) et par le deuxième transducteur à ultrasons (206b).

9. Dispositif selon la revendication 8, dans lequel le premier capteur à ultrasons (200) est aménagé de manière stationnaire, ou est aménagé pour se déplacer en réaction à un déplacement de la pièce de machine déployable.

10. Dispositif selon l'une des revendications 1 à 7, avec:
un deuxième capteur à ultrasons (300, 400),
dans lequel le contrôleur (120) est réalisé pour
activer le deuxième capteur à ultrasons (300, 400), pour émettre un signal ultrasonore en direction du premier capteur à ultrasons (200), et
activer le premier capteur à ultrasons (200) pour recevoir, par le premier transducteur à ultrasons (206a) et le deuxième transducteur à ultrasons (206b) du premier capteur à ultrasons (200), le signal ultrasonore émis par le deuxième capteur à ultrasons (300, 400).

11. Appareil selon la revendication 10, dans lequel l'un des capteurs à ultrasons (200, 300, 400) est aménagé de manière stationnaire, et l'autre des capteurs à ultrasons (200, 300, 400) est aménagé pour se déplacer en réaction à un déplacement de la pièce de machine déployable.

12. Dispositif selon la revendication 10, dans lequel les transducteurs à ultrasons (200, 300, 400) sont disposés de sorte que leur distance augmente ou diminue plus la pièce de machine déployable est déployée.

13. Dispositif selon l'une des revendications 10 à 12, dans lequel le deuxième capteur à ultrasons (400) comporte un premier transducteur à ultrasons (406a) et un deuxième transducteur à ultrasons (406b) qui sont disposés décalés dans la direction de mesure, et dans lequel le contrôleur (120) est réalisé pour activer l'un des transducteurs à ultrasons (406a, 406b) du deuxième capteur à ultrasons (400) pour émettre le signal ultrasonore.

14. Dispositif selon la revendication 13, dans lequel le décalage des transducteurs à ultrasons (206a, 206b) du premier capteur à ultrasons (200) et le décalage des transducteur à ultrasons (406a, 406b) du deuxième capteur à ultrasons (400) sont identiques, et dans lequel le premier capteur à ultrasons (200) et le deuxième capteur à ultrasons (400) sont disposés de sorte que la distance entre le premier transducteur à ultrasons (206a) du premier capteur à ultrasons (200) et le deuxième transducteur à ultrasons (406b) du deuxième capteur à ultrasons (400) ainsi que la distance entre le deuxième transducteur à ultrasons (206b) du premier capteur à ultrasons (200) et le premier transducteur à ultrasons (406a) du deuxième capteur à ultrasons (400) sont identiques.

15. Dispositif selon la revendication 13 ou 14, dans lequel le contrôleur (120) est opérationnel pour
lors d'une première mesure, activer un transducteur à ultrasons (206a, 206b) du premier capteur à ultrasons (200), pour émettre un premier signal ultrasonore, et pour activer les transducteurs à ultrasons (406a, 406b) du deuxième capteur à ultrasons (400), pour recevoir chaque fois le premier signal ultrasonore,
lors d'une deuxième mesure, activer un transducteur à ultrasons (406a, 406b) du deuxième capteur à ultrasons (400), pour émettre un deuxième signal ultrasonore et pour activer les transducteurs à ultrasons (206a, 206b) du premier capteur à ultrasons (200), pour recevoir chaque fois le deuxième signal ultrasonore, et
pour générer une pluralité de valeurs de distance sur base des deuxièmes signaux ultrasonores reçus aux transducteurs à ultrasons (206a, 206b) du premier capteur à ultrasons (200) et des premiers signaux ultrasonores reçus aux transducteurs à ultrasons (406a, 406b) du deuxième capteur à ultrasons (400).

16. Dispositif selon la revendication 15, dans lequel le contrôleur (120) est opérationnel pour générer un ou plusieurs signaux de compensation de température sur base d'une différence entre les deuxièmes signaux ultrasonores reçus aux transducteurs à ultrasons (206a, 206b) du premier capteur à ultrasons (200) et sur base de la différence entre les premiers signaux ultrasonores reçus aux transducteurs à ultrasons (406a, 406b) du deuxième capteur à ultrasons (400).

17. Dispositif selon la revendication 15 ou 16, dans lequel le contrôleur (120) est opérationnel pour effectuer une évaluation de plausibilité de la mesure sur base des valeurs de distance.

18. Machine mobile, avec:
une pièce de machine déployable, et
un dispositif selon l'une des revendications 1. à 17.

19. Machine mobile selon la revendication 18, dans laquelle la pièce de machine déployable comporte un ou plusieurs supports, un ou plusieurs poinçons, un outil de travail, une plateforme de levage et/ou un cylindre télescopique.
